# EUROPÄISCHE PATENTANMELDUNG

(11) **EP 1 125 971 A1**
(43) Veröffentlichungstag der Anmeldung: **22.08.2001**
(21) Anmeldenummer: 01103298.4
(22) Anmeldetag: 13.02.2001
(51) Int. Cl.: C08J 5/18, B44C 1/24, B44C 5/04, B32B 23/06, B32B 15/12

(54) **Verfahren zur Herstellung dekorativer plattenförmiger Verbundwerkstoffe mit Reliefstruktur**

(30) Priorität: 18.02.2000 DE 10007621
(71) Anmelder: DEKODUR GmbH & Co. KG, 69434 Hirschhorn/Neckar (DE)
(72) Erfinder: André, Volkmar Reinhart, 69434 Hirschhorn/Neckar (DE); Oelkers, Friedrich, 69434 Hirschhorn/Neckar (DE)
(74) Vertreter: Mutzbauer, Helmut, Dr.

(57) **Zusammenfassung**

Verfahren zur Herstellung dekorativer Schichtstoffkörper oder Verbundwerkstoffe mit Reliefstruktur, mit einer vorzugsweise von einer Metallfolie gebildeten Oberfläche, auf der Grundlage von gegebenenfalls auf einem Holzwerkstoffkörper miteinander unter Druck und Wärme verpressten harzgetränkten Papieren, wobei die oberste Schicht eine Dekorschicht bildet, die durch Mitverpressen eines Dekorpapiers und gegebenenfalls eines Overlaypapiers und/oder einer mit einem Kleber versehenen Metallfolie gebildet wird, dadurch gekennzeichnet, daß man über der Dekorschicht für die Dauer des Pressvorgangs ein durchbrochenes, nicht mit einem Kleber versehenes Metallblech auflegt und nach dem Verpressen wieder entfernt, sowie dekorativer Schichtstoff oder Verbundwerkstoff, wie er nach dem erfindungsgemäßen Verfahren erhalten wird.

## Beschreibung

Kunstharzgebundene plattenförmige Werkstoffe, sog. Schichtstoffplatten sind als außerordentlich robuste und dauerhafte Werkstoffe seit langem bekannt. Sie finden einerseits als technische Werkstoffe, z.B. in der Elektroindustrie als Isolierstoffe und Träger für elektrische Bauteile, in der Gegenwart vor allem als Träger für gedruckte Schaltungen ausgedehnte Verwendung.

Andererseits finden Schichtstoffplatten mit dekorativ gestalteter, insbesondere farbiger Oberfläche als sog. Kunststoffoberflächen z.B. in der Möbelindustrie, d.h. im Haushaltsbereich, an öffentlichen Orten, z.B. zur Gestaltung von Wandflächen in Eisenbahn- und Straßenbahnfahrzeugen, als Tischoberflächen in Kantinen, für Fußböden und bei vielen sonstigen Gelegenheiten Verwendung. Es gibt praktisch kaum einen Bereich des täglichen Lebens, an dem man ihnen nicht begegnet. In neuerer Zeit ist vor allem die Nachahmung metallischer Oberflächen sehr beliebt geworden.

Zur Herstellung dekorativer Schichtstoffplatten findet ein Schichtaufbau statt: Zunächst werden einige Lagen mit Kunstharz getränkter preiswerter Materialbahnen ("Träger") aus zellulosehaltigem oder anderem Material (z.B. Gewebe oder ein anderes verfilztes oder gewebtes Zellulosematerial, in der Regel jedoch Papier) auf eine stabile Platte gelegt, die später in eine Plattenpresse gebracht werden kann. Auch anorganische Träger wie Glas- oder Mineralfasern oder synthetische Fasermaterialien können für Spezialzwecke verwendet werden.

Als Kunstharz für den sog. Grundkörper wird aus wirtschaftlichen Gründen gewöhnlich ein duroplastisch härtbares Phenol-Formaldehyd-(Vor)kondensat ("Phenolharz") eingesetzt, jedoch sind rein technisch auch andere duroplastisch aushärtbare Formaldehyd-(Vor)kondensate wie Melamin- oder Harnstoffharze geeignet.

Über diesem Grundkörper werden eine oder bevorzugt mehrere Lagen von Papier aufgelegt, die mit einem hellfarbigen Harz getränkt sind, z.B. einem Melaminharz.

Der Träger für diese Dekorschicht besteht i.d.R. aus einem reinen Zellulosepapier, das entweder durch die Pigmentierung allein wirkt oder zusätzlich bedruckt ist und mit dem harzgetränkten Grundkörper in einem Zug in der beheizbaren Presse, d.h. unter Druck- und Wärmeeinwirkung durch gemeinsames Aushärten verbunden wird. Als Bindemittel für die Dekorschicht wählt man wie gesagt, nicht das gewöhnlich rotbraun gefärbte Phenolharz, sondern ein helles, nach Möglichkeit farbloses Kunstharz. Außer den gelegentlich verwendeten härtbaren (vernetzbaren) Acrylharzen werden für die Dekorschicht wegen der angestrebten Haltbarkeit vor allem duroplastisch härtbare, d.h. vernetzende Melamin-Formaldehyd-Kondensate ("Melaminharze") oder doch unter Mitverwendung von Melamin hergestellte Kondensate verwendet. Z.B. können Harnstoffharze bzw. Melamin-Harnstoff-Mischharze verwendet werden; die Beständigkeit gegen äußere Einflüsse - z.B. Wasser - hängt u.a. vom Melaminanteil ab. Über der Dekorschicht können weitere Schichten angeordnet werden, zur Verbesserung der Verschleißfestigkeit beispielsweise Deckschichten aus transluzentem Material, sog. Overlays. Hierfür werden in der Regel reine Zellulosepapiere verwendet.

Bekannt ist auch, über dem Grundkörper als dekorative Schicht eine Metallfolie aufzukleben, wobei ein Schichtstoff entsteht, der äußerlich einer massiven Metallplatte täuschend ähnlich ist und dennoch viele Vorteile besitzt, die gewöhnlich nur von Kunststoffen bekannt sind. Die Metallfolie kann dabei die gesamte Fläche bilden oder aber eine vorhandene Dekorschicht nur teilweise überdecken, sodass diese an den freien Stellen als dekorativer Untergrund sichtbar bleibt.

Die bekannten dekorativen Schichtstoffplatten sind jedoch unabhängig davon, ob eine Metallfolie aufgeklebt ist oder nicht, in jedem Falle ebenflächig begrenzt.

Reliefstrukturen, d.h. dekorative Effekte, wie sie etwa mit tiefgezogenen dünnen Metallblechen ohne weiteres erhalten werden können und die auch oft zu sehen sind, gibt es dagegen bei dekorativen Schichtstoffplatten nicht. Einzig im technischen Bereich, bei den bekannten sog. gedruckten Schaltungen erzielt man in gewisser Weise eine Reliefstruktur dadurch, dass die nicht benötigten Teile der ursprünglich einheitlichen Metalloberfläche weggeätzt werden und nur die gewünschte Leiterstruktur übrigbleibt.

Überlegungen, solche geätzten Strukturen auch für Zwecke im ästhetischen Bereich einzusetzen, haben sich nicht durchsetzen können.

Es besteht daher ganz allgemein Bedarf für dekorative Schichtstoffplatten mit einer Reliefstruktur, die sich bevorzugt in einer Metalloberfläche verkörpert, jedoch auch in reinen Kunststoffoberflächen verwirklicht sein kann.

Theoretisch könnte man solche Reliefstrukturen dadurch erzeugen, dass man als formgebende Zulage in der Plattenpresse anstelle der üblichen Pressbleche, die meist hochglänzend, in jedem Falle aber glatt sind, solche mit einer Reliefstruktur einsetzt, um deren Struktur auf der Schichtstoffoberfläche abzubilden. Aus wirtschaftlichen Gründen hat sich dies aber nicht einführen können.

Es wurde nun eine verblüffend einfache Lösung des bestehenden Problems gefunden, mit dem auf Kunststoffoberflächen Reliefstrukturen praktisch beliebiger Form erzeugt werden können.

Erfindungsgemäß stellt man dekorative Schichtstoffkörper mit Reliefstruktur dadurch her, dass man über der späteren dekorativen Schicht (die eine Metallfolie oder ein Dekorpapier sein kann) für die Dauer des Preßvorgangs als oberste Schicht ein durchbrochenes Metallblech entsprechenden Musters auflegt und dieses nach dem Entformen wieder entfernt. Es versteht sich, dass darüber die übliche Zulage, also ein Preßblech aufgelegt wird, das nach dem Entformen ebenfalls wieder entfernt wird. Das durchbrochene Metallblech kann im allgemeinen mehrmals verwendet werden und bildet eine Matrize, deren Stärke dem gewünschten Vertiefungseffekt angepasst werden muß. Geeignete Bleche jeder gewünschten Stärke, die z.B. 0,01 bis 1 mm betragen kann, sind im Handel erhältlich.

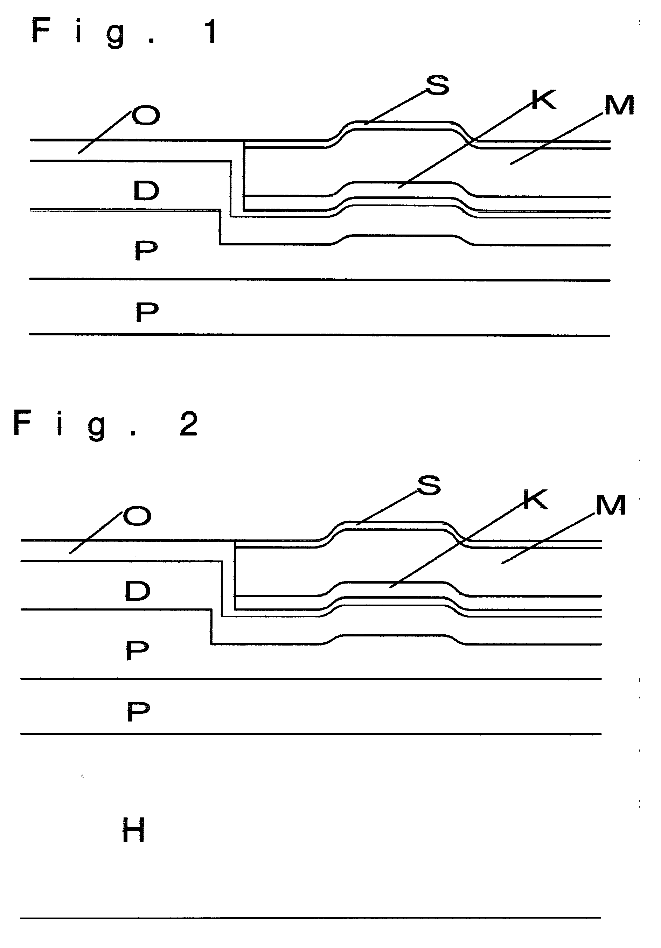

Der erfindungsgemäß erhältliche Schichtstoffkörper besteht gemäß der beigegebenen Zeichnung (Figur 1) mindestens aus
- einer aus mindestens einer, mit einem Formaldehyd-Kondensat getränkten Papierlage aufgebauten Ausgleichsschicht P,
- bedarfsweise einer vorzugsweise einlagigen harzgebundenen, als Dekorträger dienenden Papierschicht D,
- bedarfsweise mindestens einer Lage einer zellulosehaltigen harzgebundenen Deckschicht (Overlay) O;
- bedarfsweise einer Metallfolie M, die flächenmäßig kleiner als der Holzwerkstoff H sein kann
- gegebenenfalls einer mit der Metallfolie M deckungsgleichen Kleberschicht K,
- gegebenenfalls einer mit der Metallfolie M deckungsgleichen Schutzschicht S, mit der Maßgabe, dass mindestens eine der Schichten D, O und M vorhanden ist, und ferner mit der Maßgabe, dass wenigstens die oberste Schicht des Aufbaus eine Reliefstruktur aufweist, wie sie mit dem erfindungsgemäßen Verfahren erhalten wird.

Es sei darauf hingewiesen, dass der Begriff "bedarfsweise" in der vorstehenden Wiedergabe der Erfindung da, wo dies sinnvoll ist, anstelle des meist verwendeten Begriffs "gegebenenfalls" verwendet wird, um darzutun, dass es sich um ein im Rahmen der Erfindung wahlfreies Merkmal handelt, während "gegebenenfalls" nur dann verwendet wird, wenn das bezogene Merkmal vom Vorhandensein eines wahlfreien Merkmals abhängt. So ist, falls eine Schicht M, d.h. eine Metallfolie vorhanden ist, eine Kleberschicht K und gewöhnlich eine Schutzschicht S vorhanden, nicht dagegen, wenn das Merkmal "Metallfolie M" fehlt.

Das reliefgebende durchbrochene Metallblech kann im einfachsten Fall eine Gitterstruktur haben oder gelocht sein, wobei Form, Zahl, Größe und Anordnung der Durchbrüche beliebig sein kann. Auch der Flächenanteil der Durchbrüche im Verhältnis zur Gesamtfläche kann fast beliebig sein und z.B. 1 bis 75 % oder mehr betragen. Es sollte aus rein praktischen Gründen allerdings eine Materialmenge verbleiben, die sich als zusammenhängende Bahn noch handhaben läßt. Eine Restfläche von 25 % der Gesamtfläche dürfte auf jeden Fall noch gut handhabbar sein.

Die obere dekorative Schicht, d.h. im üblichen fachmännischen Sprachgebrauch die Dekorschicht, kann dabei wie gesagt eine Metallfolie oder ein Dekorpapier sein oder sowohl aus Papier aufgebaute dekorative Elemente als auch Elemente aufweisen, die durch eine, in diesem Fall durchbrochene oder nicht zusammenhängende metallische Fläche gekennzeichnet sind.

Als Ergebnis dieser Ausführungsform des erfindungsgemäßen Verfahrens ergibt sich z.B. eine dekorative Schichtstoffplatte, deren vertiefte Oberfläche eine zusammenhängende Fläche bildet, während die erhabenen Dekorelemente untereinander keine Verbindung haben. Ein Beispiel ist etwa ein erhaben erscheinendes Punktmuster. An den durchbrochenen Stellen der Matrize drückt während des Pressvorgangs das noch fließfähige Material der Trägerschicht die Dekorschicht bis zur Zulage, also dem üblichen Pressblech vor. Dabei nehmen, vor allem bei einer dekorativen Kunststoffschicht, die Dekorelemente an den durchbrochenen Stellen den Oberflächencharakter der Zulage an, erscheinen also z.B. hochglänzend, während die vertieften Stellen z.B. matt erscheinen können. Natürlich kann man für die Matrize ebenfalls ein hochglänzendes Blech verwenden.

Bei einer metallischen Oberfläche aus nachgiebigem Metall, z.B. aus Aluminium, die erfindungsgemäß einen besonders ansprechenden Eindruck macht, weisen z.B. nach dem Entformen aus einem hochglänzenden Pressblech die vorspringenden Elemente Hochglanz auf, während die tieferliegenden Elemente die ursprüngliche Struktur, beispielsweise eine gebürstete Oberfläche behalten haben.

Als Metallfolien eignen sich Folien oder dünne Bleche praktisch aller für dekorative Zwecke in Betracht kommenden Metalle, z.B. solche aus Kupfer, Aluminium, Eisen oder deren Legierungen, wie Messing oder Edelstahl. Sie können metallisch blank oder, je nach der dekorativen Absicht, auch matt, galvanisch mit anderen Metallen überzogen oder sonstwie oberflächlich verändert sein. Je nach der Art des verwendeten Metalls kann es vorteilhaft oder sogar notwendig sein, die Metallfolie mit einer Schutzschicht auszustatten. Bei Aluminium kann dies beispielsweise die durch anodische Oxidation erhältliche Oxidschicht oder eine Phosphatschicht sein. Es kann zweckmäßig sein, von vorneherein oberflächenbehandelte Metallfolien zu verwenden, die außerdem ihrerseits ein dekoratives Muster tragen (z.B. bedruckt sein) können oder eine sonstwie bearbeitete - z.B. geschliffene, gebürstete oder geätzte - Oberfläche besitzen. Ferner kann die gesamte Oberfläche der Schichtstoffplatte, also sowohl die Metallteile wie die Kunststoffteile, nachträglich mit einer Deckschicht, Schutzschicht o.ä. überzogen werden.

Um Oberflächen zu erhalten, bei denen die erhabenen Elemente zusammenhängen, während die vertieften vereinzelt sind, muß auf einem dünnen Träger, z.B. einem Overlaypapier, das entsprechende Muster in Form metallischer Elemente aufgeklebt werden.

Natürlich kann die erfindungsgemäße Struktur nicht nur auf einer reinen Schichtstoffplatte erzeugt werden, sondern auch auf einer Platte, wie man sie erhält, wenn man in an sich bekannter Weise zusammen mit den Papierlagen eine vorgeformte Platte aus einem Holzwerkstoff, z.B. eine Span- oder Tischlerplatte in die Presse einlegt und verpresst. Solche Werkstoffe werden allgemein als Verbundwerkstoffe bezeichnet. Wie allgemein bekannt, muß in diesem Falle auf der Rückseite der Holzwerkstoffplatte ein entsprechender Schichtaufbau stattfinden, als sog. Gegenzug, um ein späteres Verwerfen der Platte zu verhindern. Im Handel werden Spanplatten, die mit einem Schichtstoffaufbau versehen sind, oft als "vergütete Spanplatten" bezeichnet. Es ist aber darauf hinzuweisen, dass dieser Begriff hier insofern irreführend ist, als man unter vergüteten Spanplatten streng genommen nur Spanplatten mit einer einfachen, d.h. einlagigen Kunststoffschicht versehene Platten versteht, bei denen die Kunststoffoberfläche z.B. als Grundierung für das spätere Lackieren dient, oder für einfache Bedürfnisse, wie z.B. bei der Herstellung von Platten, aus denen Fachböden für Schränke hergestellt werden sollen.

Erfindungsgemäße Platten können demnach auch erhalten werden, indem man einen bereits durch einen Pressvorgang erhaltenen Grundwerkstoff, d.h. Tragekörper aus einem Holzwerkstoff oder Holzfaserwerkstoff anstelle des Beklebens mit einem vorgefertigten Schichtstoff mit der erfindungsgemäßen Schichtenfolge belegt und das Ganze nochmals in eine beheizbare Plattenpresse bringt und in einem Zug verbindet.

Es gibt unterschiedliche Konstruktionen solcher Plattenpressen, wie z.B. Ein- und Mehretagenpressen, jedoch werden aus verschiedenen Gründen praktisch nur mehr Einetagenpressen gebaut. In der Regel werden sie mit Dampf geeigneten Drucks bzw. geeigneter Temperatur oder elektrisch beheizt und weisen eine beträchtliche Wärmekapazität auf, was das Pressen zu einer energetisch und technisch aufwendigen Angelegenheit macht.

Die Oberflächen erfindungsgemäß beschichteter Holzwerkstoffe, insbesondere vergüteter Spanplatten haben somit im Prinzip den gleichen Aufbau wie die erfindungsgemäße Schichtstoffplatte, sind aber unmittelbar auf der Holzwerkstoffoberfläche hergestellt. Sie bestehen aus einem Grundkörper aus einer oder mehreren Lagen des mit Kunstharz getränkten Trägers und einer darüberliegenden Dekorschicht, im vorliegenden erfindungsgemäßen Fall einer Schicht mit Reliefstruktur, insbesondere einer Metalloberfläche. Grundkörper und Dekorschicht sind durch das gemeinsame Aushärten unter Druck- und Wärmeeinwirkung miteinander verbunden. Reine Schichtstoffplatten und plattenförmige Verbundwerkstoffe können sich im Schichtaufbau durch die Anzahl der Papierlagen unterscheiden, die für den Aufbau des Trägers verwendet werden. Während die Schichtstoffplatte aus Stabilitätsgründen eine Mehrzahl von Papierlagen aufweisen wird, können Verbundwerkstoffe, deren Stabilität wesentlich von dem vorhandenen Holzkern bestimmt wird, unter Verwendung von

Die über dem Grundkörper befindliche Dekorschicht besteht im allgemeinen aus mindestens einer Lage eines mit hellfarbigem Harz getränkten Trägers, wobei man als Bindemittel wegen der angestrebten Haltbarkeit vor allem duroplastisch härtbare Melaminharze oder doch unter Mitverwendung von Melamin hergestellte Formaldehyd-Kondensate verwendet. Auch Harnstoffharze können verwendet werden, die jedoch wenig beständig gegen äußere Einflüsse wie Feuchtigkeit sind. Die vorstehend angedeutete Unterscheidung zwischen Kondensaten und Vorkondensaten bezieht sich darauf, dass die zur Tränkung eingesetzten Formaldehydharze bereits durch einen Kondensationsprozess hergestellt werden, der aber unvollständig ist, sodass erst beim Pressvorgang irreversibel ein chemisch vernetztes dreidimensionales Netzwerk, also ein sog. Duroplast entsteht. Die Vorkondensation findet in der Regel unter Austritt von Wasser statt und hat mit der Herstellung der betrachteten Schichtwerkstoffe nichts zu tun.

Wenn als oberste Schicht eine Metallfolie verwendet wird, so wird ein Material verwendet, das einseitig mit einem Haftgrund (einem sog. Primer), auf jeden Fall aber mit einem Klebelack versehen ist, der ebenfalls in der Wärme aushärtet. Nach einem Vorschlag in der US-PS 3,475,240 kann anstelle einer Dekorschicht aus harzgetränktem Papier eine rückseitig angeätzte Metallfolie mit einem geeigneten Kleber auf einen Grundkörper aus phenolharzgetränkten Papierschichten aufgepresst werden. Die Metallfolie kann unmittelbar über dem Grundkörper aufgebracht werden, d.h. es muß kein Dekorpapier verwendet werden.

Gleich, ob man nun Metallfilme oder Dekorfolien auf Papierbasis auf Tragekörper aus Spanplattenmaterial aufbringen will, ist es wichtig, dass die ursprüngliche Oberfläche des Tragekörpers, d.h. die natürliche Unebenheit einer rohen Spanplatte nicht mehr wahrnehmbar ist. Dazu werden die Unebenheiten wie bei jeder handelsüblichen Spanplatte zunächst durch Schleifen bearbeitet. Es ist aber in der Regel immer erforderlich, zunächst eine sog. Ausgleichsschicht aufzubringen, eben die oben erwähnte Schicht aus einem Grundkörper aus einer oder mehreren Lagen eines mit Kunstharz getränkten Trägers und erst dann die Dekor- oder Metallfolie, da sonst selbst bei einer sorgfältig geschliffenen Spanplatte der Untergrund, wie Fachleute sagen "durchtelegrafiert", d.h. die Struktur des Untergrunds sich auf der Metalloberfläche in Form von Unebenheiten und evt. sogar einer körnigen Struktur erkennen lässt.

Die Herstellung von Holzwerkstoffplatten mit Metalloberflächen durch Verpressen in der Wärme ist wegen des grundsätzlichen Materialunterschieds von Unterbau und Metallfolie an sich problematisch. Dabei soll die Tatsache, dass Holzwerkstoffe stets auf beiden Oberflächen mit dem gleichen Material beschichtet werden müssen, damit sie sich nicht später verformen, nicht weiter betrachtet werden, weil dies bei jeder Art von Oberflächenbeschichtung eines Holzkörpers üblich ist, wie schon aus der klassischen Furniertechnik bekannt.

Es hat sich aber gezeigt, dass das Verpressen z.B. einer Spanplatte mit einer oder mehreren Lagen eines mit Kunstharz getränkten Trägers und einer gegebenenfalls mit einem Kleber versehenen Metallfolie besonders dann oft zu Misserfolgen führt, wenn die Presse sofort nach dem Ende des Aushärtungsprozesses geöffnet wird, ohne die Pressplatten zuvor wieder abzukühlen (vom Fachmann als "rückkühlen" bezeichnet). Das äußere Erscheinungsbild einer so erhaltenen metallbeschichteten Platte macht den Eindruck, als ob die Struktur der in der Tiefe liegenden Spanplattenoberfläche durchscheint, so als ob überhaupt keine Ausgleichsschicht vorhanden wäre. Diese Erscheinung tritt vor allem gegen die Plattenmitte hin auf, ein Hinweis, dass der Wärme- oder der Feuchtehaushalt der Platte während des Pressvorgangs eine Rolle spielt. Die Erscheinung führt im Extremfall zu mehr oder minder ausgedehnten blasigen Flächen, die die Platte unbrauchbar machen. Dieser Fehler tritt nicht oder nur selten auf bei Platten, die vor dem Entspannen des Pressdrucks und Öffnen der Presse auf eine Temperatur in der Nähe der Raumtemperatur rückgekühlt worden waren.

Als Ursache könnte also eine Rolle spielen, dass Metallfilme Feuchtigkeit weder durchlassen noch aufnehmen können und daher der Feuchtehaushalt des Holzwerkstoffs samt der darüber befindlichen Schicht aus kondensierbarem Harz bei der Beschichtung mit Metallfolien oder -filmen gestört ist. Diese Erklärung soll aber die Erfindung in keiner Weise begrenzen.

Jedenfalls ist das Erfordernis des Rückkühlens ein Vorgang, der die Wirtschaftlichkeit des Herstellprozesses beschichteter Spanplatten entscheidend beeinflusst:
― Erstens wird die stündliche Ausstoßleistung einer Plattenpresse wesentlich verringert, wenn an jeden Pressvorgang eine Rückkühlphase angeschlossen werden muß, weil das Aufheizen und das Abkühlen insgesamt etwa genausolange dauert wie der eigentliche Pressvorgang.
― Zweitens steigen die Energiekosten des an sich schon energetisch aufwendigen Prozesses außerordentlich, wenn die gesamte Presse nach jedem Presszyklus abgekühlt und wieder aufgeheizt werden muß.
― Drittens werden alle Teile der Presse, die irgendwie mit der Temperierung zu tun haben, vor allem die Druckplatten und Pressbleche, durch häufige schroffe Temperaturwechsel belastet und altern.

Wenn man trotz Verzicht auf das Rückkühlen beim erfindungsgemäßen Verarbeiten von beschichteten Spanplatten Misserfolge vermeiden will, kann man nach einer Ausführungsform der Erfindung folgendermaßen vorgehen:

Ein Tragekörper auf Holzbasis, insbesondere eine Spanplatte wird zunächst unter Druck und Wärme mit einer Schicht aus einer oder mehreren Lagen eines harzgetränkten Ausgleichspapiers sowie gegebenenfalls einem harzgetränkten Dekorpapier verpresst und erst auf die so vorbereitete Platte eine mit einem Kleber versehene Metallfolie aufgebracht und, wiederum unter Druck und Wärme, mit der Platte verbunden. Auch die bereits gehärteten Schichten unter der Metallfolie erweichen beim erneuten Verpressen mit der Metallfolie soweit, dass der erfindungsgemäße Reliefeffekt erzielt wird, jedenfalls bei Reliefstärken von z.B. 0,01 bis etwa 0,2 mm.

Gegenstand einer Ausführungsform der Erfindung ist somit ein Verfahren zur Herstellung von metallbeschichteten Verbundwerkstoffen mit einem Tragekörper aus einem Holzwerkstoff, insbesondere einer Spanplatte, durch Verpressen des Tragekörpers unter Druck und Wärme mit einer Ausgleichsschicht auf der Grundlage mindestens eines harzgetränkten Ausgleichspapiers und einer mindestens eine Teilfläche der Platte überdeckenden Metallfolie, über der als reliefgebende Matrize eine durchbrochene Metallfolie aufgelegt wird, die nach dem Verpressen wieder entfernt wird, das dadurch gekennzeichnet ist, daß in einem ersten Schritt die Ausgleichsschicht und in einem zweiten Schritt die Metallfolie(n) jeweils vorzugsweise unter Verzicht auf Rückkühlung unter Druck- und Wärmeeinwirkung aufgebracht werden.

Unter Rückkühlung wird für die Zwecke der Beschreibung der Erfindung eine absichtliche Abkühlung der gesamten Plattenpresse, d.h. der Druckplatten und der Zulagen (vor allem der Pressbleche) zwischen den einzelnen Arbeitsgängen verstanden, z.B. mittels Kühlwasser; die unvermeidliche und geringfügige Abkühlung der Presse und ihrer Teile zwischen den einzelnen erfindungsgemäßen Arbeitsgängen durch die Raumluft ist hierunter nicht zu verstehen.

Das Ausgleichspapier ist gewöhnlich ein mit einem duroplastisch härtbaren Formaldehyd-Kondensat (Phenolharz oder Melaminharz) getränktes Papier, z.B. ein Kraftpapier, es kann sich aber auch unmittelbar um ein sog. Dekorpapier handeln, wenn weniger hohe Anforderungen an die Werkstoffqualität gestellt werden. Natürlich können andererseits für die Herstellung einer Ausgleichsschicht auch mehrere Lagen von harzgetränktem Papier verwendet werden.

Für hochwertige Beschichtungen kann das mit dem duroplastisch härtbaren Harz getränktes Dekorpapier über einer Ausgleichsschicht aus einem preiswerteren Material aufgebracht werden, z.B. wenn die Metallfolie nur eine Teilfläche der gesamten Oberfläche überdeckt und der nicht überdeckte Teil aus Gründen der beabsichtigten ästhetischen Wirkung sichtbar bleibt. Als duroplastisch härtbares Harz für das Dekorpapier wird üblicherweise ein Melaminharz oder ein Melamin enthaltendes Harnstoffharz verwendet. Der Papierwerkstoff kann z.B. ein Zellulosepapier sein, aber auch gewöhnliche, bedruckbare Papierqualitäten sind geeignet.

Zwischen dem Aufbringen des Ausgleichspapiers und gegebenenfalls der Dekorfolie und der Metallfolie kann eine Zwischenlagerung außerhalb der Presse stattfinden, z.B. im Stapel, wobei die Wärme längere Zeit erhalten bleibt, die aber erfindungsgemäß nicht erforderlich ist. Man kann andererseits vorhandene, z.B. mit einer Dekorschicht oder einer bearbeitungsfähigen Sperrschicht versehene Spanplatten nachträglich mit einer Metallfolie beschichten.

Die Wärme/Druckbehandlung beim Aufbringen des Ausgleichspapiers und/oder des Dekorpapiers kann bereits abgebrochen werden, sobald eine Teilhärtung erfolgt ist, d.h. dass eine unvollständig ausgehärtete Ausgleichs- oder Dekorschicht bereits zur Ausführung der Erfindung ausreicht, da beim Aufbringen der Metallfolie und deren Verklebung mit dem Untergrund in jedem Fall eine weitere Erwärmung stattfindet, die gegebenenfalls ein Durchhärten eines unvollständig ausgehärteten Harzes in der Ausgleichsschicht zur Folge hat.

Als Kleber für die Metallfolie werden für diesen Zweck übliche Massen eingesetzt. Geeignet sind z.B. wärmehärtbare Phenolharze, die in Form von (im allgemeinen lösungsmittelhaltigen) Lackierungen auf eine Seite der Metallfolie aufgebracht worden sind. Nach dem Entfernen des Lösungsmittels können diese lackierten Metallfolien ohne weiteres erfindungsgemäß eingesetzt werden. Andere wärmehärtbare Klebstoffe sind z.B. Vorprodukte, die durch Wärmeeinwirkung aushärten und nach dem Aushärten Polyurethane oder Epoxidharze ergeben. Es scheint wichtig zu sein, dass es sich um Produkte handelt, die bei der Aushärtung (Vernetzung) kein Wasser abspalten, da dies möglicherweise den erfindungsgemäß angestrebten Erfolg beeinträchtigen würde. Aus der Fachliteratur sind für das dauerhafte Aufkleben von Metallen geeignete Mittel bekannt, die sich zur Ausführung der Erfindung eignen.

Die erfindungsgemäß erhältliche, vorgefertigte, mit einer kunstharzgebundenen Oberfläche vergütete und darüber mit einem Metall in Reliefstruktur beschichtete Holzwerkstoffplatte (Verbundwerkstoffplatte) besteht gemäß der beigegebenen Zeichnung (Figur 2) mindestens aus
― einem Tragekörper aus einem Holzwerkstoff, insbesondere einer Spanplatte H,
― einer aus mindestens einem, mit einem Formaldehyd-Kondensat getränkten Papier aufgebauten Ausgleichsschicht P,
― bedarfsweise einer vorzugsweise einlagigen harzgebundenen, als Dekorträger dienenden Papierschicht D,
― bedarfsweise mindestens einer Lage einer zellulosehaltigen harzgebundenen Deckschicht (Overlay) O;
― bedarfsweise einer Metallfolie M, die flächenmäßig kleiner als die Fläche des Holzwerkstoffs H bzw. der Papierschichten P, D und/oder O sein kann,
― gegebenenfalls einer mit der Metallfolie M deckungsgleichen Kleberschicht K,
― gegebenenfalls einer mit der Metallfolie M deckungsgleichen Schutzschicht S,
mit der Maßgabe, dass mindestens eine der Schichten D, O und M vorhanden ist, und ferner mit der Maßgabe, dass wenigstens die oberste Schicht des Aufbaus eine Reliefstruktur aufweist, wie sie mit dem erfindungsgemäßen Verfahren erhalten wird.

Auf den Flächenanteil und die Form der Metallfolie im Verhältnis zur Dekor-(d.h. Kunststoff-)oberfläche kommt es dabei nicht an, d.h. das Flächenverhältnis und die Form wird lediglich durch ästhetische, nicht durch technische Gründe bestimmt und kann demnach beliebige Werte annehmen; z.B. können zwischen 50 und 100 Prozent der Oberfläche Metall und entsprechend 0 bis 50 Prozent der Oberfläche Kunststoff sein. Falls eine Schicht M vorhanden ist, ist auch eine Kleberschicht K und bedarfsweise eine Schutzschicht S vorhanden.

Wenn über dem Dekorpapier in an sich bekannter Weise noch ein Overlaypapier, d.h. mindestens eine Lage einer zellulosehaltigen, ebenfalls harzgebundenen, im wesentlichen transparenten Deckschicht aufgebracht wird, erhält man eine besonders haltbare und farbintensive Dekoroberfläche, wobei ersichtlich die Metallfolie M nicht direkt in den Dekorträger D, sondern zunächst in das Overlay O eingepresst ist.

Die erfindungsgemäße metallbeschichtete Holzwerkstoffplatte ist in der Regel auf ihrer Unterseite ebenfalls mit einem Schichtaufbau versehen, der im Aufbau der Schauseite entspricht, jedoch im allgemeinen keine dekorative Schicht aufweisen wird und lediglich als sog. Gegenzugschicht dient, d.h. den unvermeidlichen Spannungen entgegenwirkt, die die Beschichtung der Schauseite hervorruft.

Der erfindungsgemäße Aufbau kann entsprechend den beigegebenen Abbildung leicht dadurch festgestellt werden, dass man den betreffenden Formkörper senkrecht zur Oberfläche schneidet, ggf. anschleift und den Schichtaufbau bei entsprechender Vergrößerung z.B. mit einer Lupe betrachtet.

Zur Herstellung einer erfindungsgemäßen Verbundwerkstoffplatte ist im einzelnen das folgende zu sagen: Als Tragekörper zur Herstellung von erfindungsgemäßen Platten wird in der Regel eine Spanplatte verwendet. Je nach dem späteren Verwendungszweck können harnstoffharzgebundene, phenolharzgebundene oder polyisocyanatgebundene Spanplatten eingesetzt werden. Sperrholzplatten, Tischlerplatten, Hartfaserplatten und andere Holzwerkstoffe sind als Tragekörper gleichfalls geeignet, soweit sie sich für die Verarbeitung in einer beheizbaren Plattenpresse eignen.

Als Trägermaterial für die Ausgleichsschicht P wird genau wie bei der Herstellung von Schichtstoffplatten ohne Holzwerkstoffträger i.a. sog. Kraftpapier verwendet; im übrigen ist hier Papier im weitesten Sinne gemeint - es können auch andere, papierähnliche, geeignete Träger wie Vliesstoffe (sog. non-woven fabrics), Gewebe o.ä. verwendet werden. Als Harze für die Herstellung der Ausgleichsschicht P werden i.a. Phenol-Formaldehyd-Kondensate verwendet. Diese Harze sind in Form des harzgetränkten Papiers zunächst als sogenannte Vorkondensate vorhanden (bei Phenolharzen "Resole" genannt), die fließfähig, d.h. thermoplastisch verformbar sind und in der Wärme (oberhalb von etwa 100°C), nach der klassischen Einteilung der Aushärtungszustände allmählich in den unlöslichen und unschmelzbaren "Resitol"- und schließlich "Resit"-Zustand übergehen. Die Anzahl der benötigten Lagen harzgetränkten Papiers kann im allgemeinen geringer sein als bei der Herstellung von reinen Schichtstoffplatten, worauf bereits oben hingewiesen wurde. Z.B. können 1 bis 5 Lagen ausreichen, während bei Schichtstoffplatten bis zu 20 oder mehr Papierlagen P sinnvoll sind.

Die Papierträger für die gegebenenfalls vorhandene Dekorschicht und das Overlay sind üblicherweise reine Zellulosepapiere. Als Kunstharz für die Dekorschicht ist vor allem Melaminharz, d.h. ein Melamin-Formaldehyd-Vorkondensat geeignet, das in der Wärme wie das Phenolharz unter Vernetzung aushärtet. Geeignet sind aber auch andere duroplastisch härtbare Harze wie Harnstoffharze (wenn es auf z.B. Witterungsbeständigkeit weniger ankommt) sowie Epoxidharze, Polyesterharze, Polyurethanharze oder wärmehärtbare Acrylharze.

Alle diese Harze sind handelsüblich und ihre Verarbeitung ist in der Fachliteratur oder den Druckschriften der Hersteller beschrieben. Ferner sind vorgefertigte harzgetränkte Papiere sowohl zur Herstellung der Ausgleichsschicht wie der Dekorschicht im Handel.

Zur Verklebung der Metallfolie mit der Kunststoffoberfläche können unterschiedliche Mittel verwendet werden; z.B. können Schmelzkleber (thermoplastisch verarbeitbare Kleber auf der Grundlage z.B. von Vinylpolymerisaten) oder duroplastisch aushärtbare (wärmereaktive) Kleber eingesetzt werden, die eine ausreichende Affinität zur Metalloberfläche aufweisen (z.B. handelsübliche Metallkleber auf der Grundlage von Kresol-Formaldehyd-Kondensaten, die in Form von Lackfilmen aufgetragen werden können). Auch diese Klebstoffe sind weitgehend handelsüblich.

Der erfindungsgemäße Pressvorgang geschieht in einer üblichen Plattenpresse. Der Pressdruck kann z.B. zwischen 10 und 200 bar betragen, was auch von der Leistungsfähigkeit der Presse abhängt und nicht erfindungsspezifisch ist. Die Presstemperatur liegt i.a. zwischen 100 und 200°C. Aus wirtschaftlichen oder technischen Gründen kann es zweckmäßig sein, während des Härtungsvorgangs die Temperatur und/oder den Druck abnehmen oder ansteigen zu lassen. Wegen der unterschiedlichen Reaktivität der handelsüblichen Harze lässt sich ein allgemeiner Zeitbedarf für die Aushärtung nicht angeben; die beste Härtezeit ist durch einen Vorversuch zu ermitteln.

Nach dem Entformen lässt sich die lediglich zur Reliefgebung mitverpresste Metallfolie ohne weiteres wieder entfernen, da Metallfolien ohne Kleberschicht auf dem erfindungsgemäßen Schichtaufbau nicht haften.

## Patentansprüche

1. Verfahren zur Herstellung dekorativer Schichtstoffkörper mit Reliefstruktur auf der Grundlage von miteinander unter Druck und Wärme verpressten harzgetränkten Papieren, wobei die oberste Schicht eine Dekorschicht bildet, die durch Mitverpressen eines Dekorpapiers und gegebenenfalls eines Overlaypapiers und/oder einer mit einem Kleber versehenen Metallfolie gebildet wird, dadurch gekennzeichnet, daß man über der Dekorschicht für die Dauer des Pressvorgangs ein durchbrochenes, nicht mit einem Kleber versehenes Metallblech auflegt und nach dem Verpressen wieder entfernt.

2. Verfahren nach Anspruch 1, dadurch gekennzeichnet, daß das durchbrochene Metallblech eine Matrize bildet, deren Stärke dem gewünschten Vertiefungseffekt ist und z.B. 0,01 bis 1 mm beträgt.

3. Schichtstoffkörper mit Reliefstruktur bestehend gemäß der beigegebenen Zeichnung (Figur 1) mindestens aus
- einer aus mindestens einem, mit einem Formaldehyd-Kondensat getränkten Papier aufgebauten Ausgleichsschicht P,
- bedarfsweise einer vorzugsweise einlagigen harzgebundenen, als Dekorträger dienenden Papierschicht D,
- bedarfsweise mindestens einer Lage einer zellulosehaltigen harzgebundenen Deckschicht (Overlay) O,
- gegebenenfalls einer Kleberschicht K,
- bedarfsweise einer mit der Kleberschicht K deckungsgleichen Metallfolie M, die flächenmäßig kleiner als der Holzwerkstoff H sein kann
- gegebenenfalls einer mit der Metallfolie M deckungsgleichen Schutzschicht S,
mit der Maßgabe, dass mindestens eine der Schichten D, O und M vorhanden ist, sowie, falls eine Schicht M vorhanden ist, eine Kleberschicht K und gegebenenfalls eine Schutzschicht S und ferner mit der Maßgabe, dass wenigstens die oberste Schicht des Aufbaus eine Reliefstruktur aufweist, wie er mit dem Verfahren nach Anspruch 1 oder 2 erhalten wird.

4. Schichtstoffkörper mit Reliefstruktur nach Anspruch 3, dessen Oberfläche von einer gegebenenfalls mit einer Schutzschicht versehenen Metallfolie gebildet wird, dadurch gekennzeichnet, daß diese aus Kupfer, Aluminium, Eisen oder deren Legierungen, wie Messing oder Edelstahl besteht.

5. Schichtstoffkörper oder Verbundwerkstoff mit einem Tragekörper aus einem Holzwerkstoff mit oberflächlicher Reliefstruktur nach Anspruch 3, wobei ein bereits durch einen Pressvorgang erhaltener Grundwerkstoff, wie eine Spanplatte, Tischlerplatte oder Faserplatte mit einem Schichtaufbau nach Anspruch 3 versehen ist.

6. Verfahren zur Herstellung von metallbeschichteten Schichtstoffkörpern oder Verbundwerkstoffen nach Anspruch 5, durch Verpressen des Tragekörpers unter Druck und Wärme mit einer Ausgleichsschicht auf der Grundlage mindestens eines harzgetränkten Ausgleichspapiers und einer mindestens eine Teilfläche der Platte überdeckenden Metallfolie, über der als reliefgebende Matrize eine durchbrochene Metallfolie aufgelegt wird, die nach dem Verpressen wieder entfernt wird, dadurch gekennzeichnet ist, daß in einem ersten Schritt die Ausgleichsschicht und in einem zweiten Schritt die Metallfolie(n) jeweils vorzugsweise unter Verzicht auf Rückkühlung unter Druckund Wärmeeinwirkung aufgebracht werden.

7. Schichtstoffkörper oder Verbundwerkstoff mit einem Tragekörper aus einem Holzwerkstoff mit einer Oberfläche mit Reliefstruktur, bestehend gemäß der beigegebenen Zeichnung (Figur 2) mindestens aus
― einem Tragekörper aus einem Holzwerkstoff, insbesondere einer Spanplatte H,
― einer aus mindestens einem, mit einem Formaldehyd-Kondensat getränkten Papier aufgebauten Ausgleichsschicht P, und/oder
― bedarfsweise (gegebenenfalls) einer vorzugsweise einlagigen harzgebundenen, als Dekorträger dienenden Papierschicht D,
― bedarfsweise (gegebenenfalls) mindestens einer Lage einer zellulosehaltigen harzgebundenen Deckschicht (Overlay) O;
― gegebenenfalls einer Kleberschicht K,
― bedarfsweise (gegebenenfalls) einer mit der Kleberschicht K deckungsgleichen Metallfolie M, die flächenmäßig kleiner als der Holzwerkstoff H sein kann
― bedarfsweise (gegebenenfalls) einer mit der Metallfolie M deckungsgleichen Schutzschicht S,
mit der Maßgabe, dass mindestens eine der Schichten D, O und M vorhanden ist, sowie, falls eine Schicht M vorhanden ist, eine Kleberschicht K und gegebenenfalls eine Schutzschicht S und ferner mit der Maßgabe, dass wenigstens die oberste Schicht des Aufbaus eine Reliefstruktur aufweist, wie sie mit dem erfindungsgemäßen Verfahren erhalten wird.
